# EUROPEAN PATENT SPECIFICATION

(11) **EP 1 553 685 B1**
(45) Date of publication and mention of the grant of the patent: **12.05.2010**
(21) Application number: 05000114.8
(22) Date of filing: 05.01.2005
(51) Int. Cl.: H02K 33/16, H02K 1/02

(54) **Stator for reciprocating motor**
Stator für einen Hubkolbenmotor
Stator pour moteur alternatif

(30) Priority: 10.01.2004 KR 2004001794
(43) Date of publication of application: 13.07.2005
(73) Proprietor: LG Electronics, Inc., Seoul (KR)
(72) Inventor: Lee, Hyuk, Daeya-Dong, Seiheung Gyeonggi-Do (KR); Jeong, Sang-Sub, Geumcheon-gu Seoul (KR)
(74) Representative: Cohausz & Florack

(56) References cited:
- EP-A- 1 670 116
- EP-A1- 1 089 418
- JP-A- 11 187 639
- JP-A- 2001 178 028
- US-A1- 5 990 584
- US-A1- 2003 102 763

## Description

### BACKGROUND OF THE INVENTION

### 1. Field of the Invention

The present invention relates to a stator for a reciprocating motor, and more particularly to, a stator for a reciprocating motor which is capable of improving the efficiency and productivity of the stator.

### 2. Description of the Background Art

In general, a motor is used as a core driving source for most electric and electronic goods such as a compressor, washing machine and electric fan and widely used in the industry as a whole. The motor serves to change electric energy into kinetic energy. Such a motor is various in types, and can be largely classified into rotary motor changing the electric energy into rotating movements and a reciprocating motor changing the electric energy into linear reciprocating movements.

Generally, it can be said that a reciprocating motor capable of realizing linear movements without any specific apparatus is more appropriate for the situation demanding linear movements.

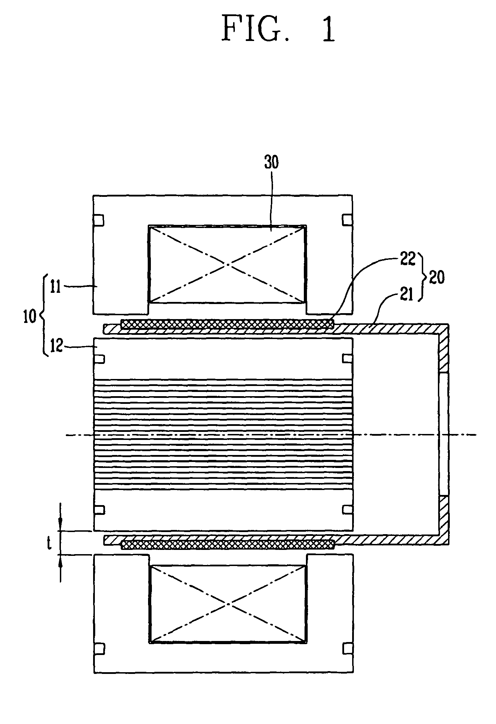

One example of such a reciprocating motor is illustrated in Fig. 1. Fig. 1 is a sectional view showing one example of a conventional reciprocating motor. As illustrated therein, the conventional reciprocating motor includes a stator assembly 10 forming a flux and a mover assembly 20 performing linear reciprocating movements_by the flux of the stator assembly 10.

The stator assembly 10 consists of an outer stator 11 formed in a cylindrical shape so as to be disposed in the outer side of the mover assembly 20 and an inner stator 12 formed in a cylindrical shape so as to be disposed in the inner side of the outer stator 11 with a predetermined core gap t.

The outer stator 11 is formed by laminating thin silicon steel sheets of a n shape in a circumferential direction on the outer circumferential surface of a coil 30 of a ring shape generating a change of the flux.

The mover assembly 20 consists of a mover body 21 movably arranged in an air gap between the outer stator 11 and the inner stator 12 and a plurality of magnets 22 fixed on the outer circumferential surface of the mover assembly 21 with same intervals therebetween. Unexplained reference numeral 13 in the drawings denotes a fixed ring.

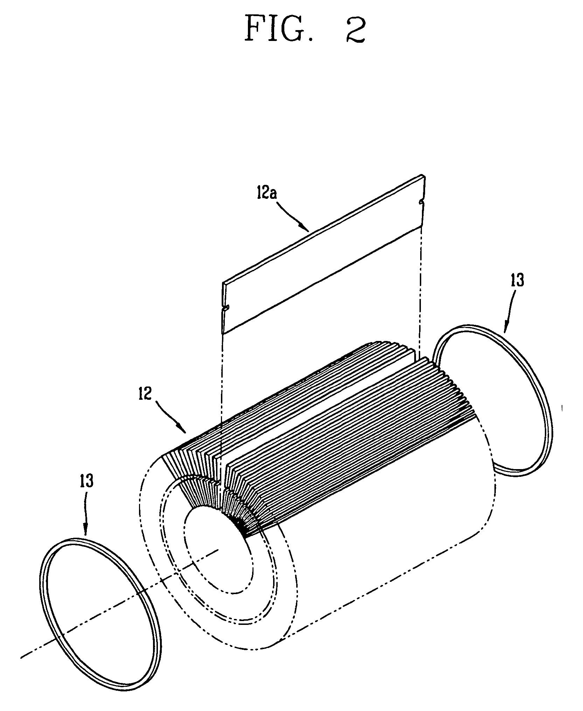

Fig. 2 is a perspective view showing an inner stator for the conventional reciprocating motor. As illustrated therein, the inner stator 12 is formed by laminating thin silicon steel sheets of a rectangular shape in circumferential direction.

Operations of the conventional reciprocating motor constructed as above will be described as follows.

When electric current is applied to the winding coil 30, the flux is formed around the winding coil 30. The flux forms a closed loop along with the outer stator 11 and the inner stator 12. At this time, since the magnet 22 of the stator assembly 20 is placed on the flux formed by the coil 30, the mover body 21 performs linear reciprocating movements as the magnet 22 is pushed or pulled along the direction of the flux by an interaction with the flux of the winding coil 30.

However, the inner stator of the conventional reciprocating motor has adopted the method of laminating thin sheets one by one in circumferential direction in order to reduce eddy current loss and increase the sectional area through which a flux passes. This method is difficult to manufacture and needs an excessive production cost.

European patent application EP 1 670 116 A1 that has been published after the filing date of the present application but claims an earlier priority discloses a yoke used for an electromagnetic actuator. The yoke is formed by molding a soft magnetic iron powder. In the yoke, a discontinuous portion is formed which prevents the occurrence of eddy current loss. This discontinuous portion prevents eddy current and permits the actuator to operate at high efficiency.

European patent application EP 1 089 418 A1 discloses a linear motor. The linear motor includes a tubular outer yoke, a tubular inner yoke disposed in outer yoke, a coil provided to inner yoke, permanent magnets vibrating following a magnetic flux produced by the coil and a vibrator made of magnetic material and supporting the permanent magnets. A magnetic loop produced by the outer yoke and the inner yoke travels through the vibrator free from interference by the vibrator because the vibrator is made of magnetic material. As a result, the linear motor vibrates efficiently.

Japanese patent application JP 2001 178028 A discloses a motor. At least one of a rotor or a stator of this motor is made of a soft magnetic material which contains magnetic powder particles composed of metal particles which have an average particle diameter of 10-400 µm and are made of iron or iron alloy, metal oxide films which cover the circumferences of the metal particles and contain an element which is easier to oxidize than iron as a main component and binder metal which binds the magnetic powder particles with each other. At least a part of a surface of the rotor or stator using the magnetic powder is covered with an oxide film of covering metal, with a thickness of 20-100 µm. Fluorine resin may be contained in the covering oxide film of the covering metal. Aluminium may be employed as the binder metal and the covering metal. Furthermore, the rotor may rotate, while the rotor and the stator are brought into contact with each other.

### SUMMARY OF THE INVENTION

It is an object of the present invention to provide a stator for a reciprocating motor which can improve productivity and motor efficiency since it is easy to manufacture.

To achieve these and other advantages and in accordance with the purpose of the present invention, as embodied and broadly described herein, there is provided a stator for a reciprocating motor, comprising: a first stator provided with a winding coil and a second stator formed by molding several stator blocks of a circular arc shape having a predetermined axial length by powder metallurgy, radially laminating the stator blocks and fixing them. The second stator is inserted with a predetermined air gap from the first stator. The angle of the inner circumferential arc of the fixed blocks and the angle of the outer circumferential arc thereof are made different so that eddy current breaking slits are formed between the fixed blocks.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

### In the drawings:

Fig. 1 is a sectional view showing one example of a conventional reciprocating motor;
Fig. 2 is a perspective view showing an inner stator for the conventional reciprocating motor;
Fig. 3 is a sectional view showing one example of a reciprocating motor according to the present invention;
Fig. 4 is a perspective view showing a second stator for a reciprocating motor not according to the present invention;
Fig. 5 is a perspective view showing a second stator for a reciprocating motor not according to the present invention;
Fig. 6 is a perspective view showing a second stator for a reciprocating motor not according to the present invention;
Fig. 7 is a perspective view showing a second stator for a reciprocating motor not according to the present invention;
Fig. 8 is a perspective view showing a second stator for a reciprocating motor according to an embodiment of the present invention; and
Fig. 9 is a perspective view showing a second stator for a reciprocating motor not according to the present invention.

### DETAILED DESCRIPTION OF THE PREFERRED EMBODIMENTS

A stator structure for a reciprocating motor according to the present invention will now be described in detail with reference to embodiments illustrated in the accompanying drawings. A description will be omitted with respect to the parts same as the conventional art.

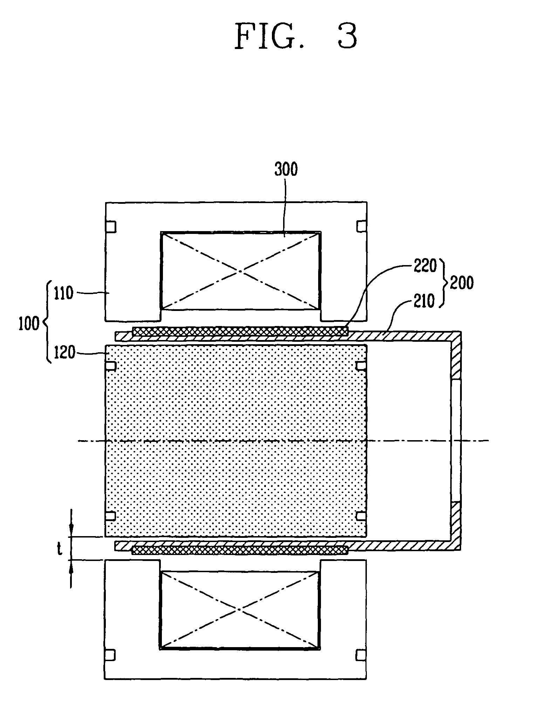

Fig. 3 is a sectional view showing one example of a reciprocating motor according to the present invention. Referring to this, the reciprocating motor of this includes a stator assembly 100 forming a flux and a mover assembly 200 performing linear reciprocating movements by the flux of the stator assembly 100.

The stator assembly 100 consists of a first stator 110 provided with a winding coil 300 and a second stator 120 inserted with a predetermined air gap t from the first stator 110 and molded by powder metallurgy.

The first stator 110 is formed by laminating thin silicon steel sheets of a Π shape in a circumferential direction on the outer circumferential surface of the coil 300 of a ring shape generating a change of the flux.

The mover assembly 200 consists of a mover body 210 movably arranged in an air gap between the outer stator 110 and the inner stator 120 and a plurality of magnets 220 fixed on the outer circumferential surface of the mover assembly 210 with same intervals therebetween.

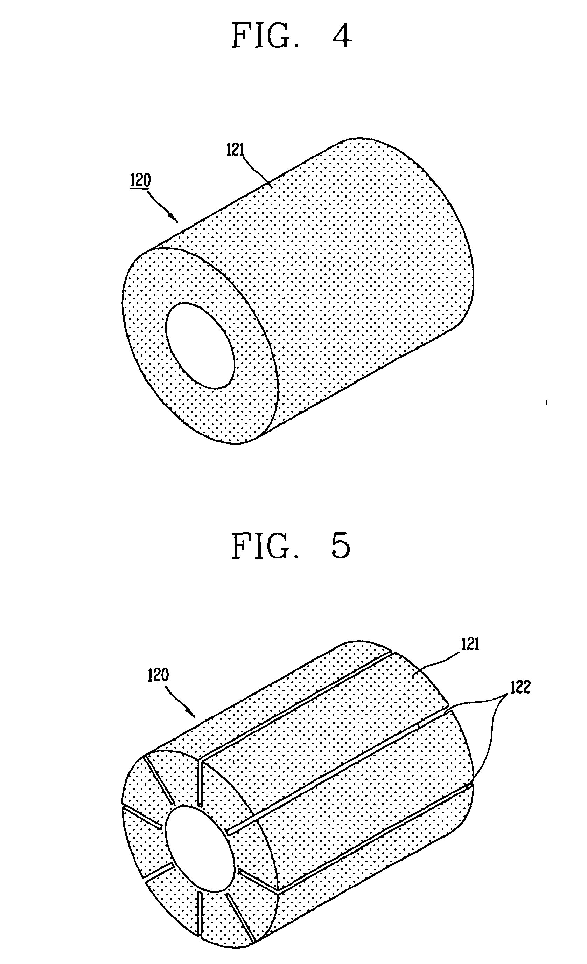

Fig. 4 is a perspective view showing a second stator for a reciprocating motor not according to the present invention.

As illustrated therein, in the second stator 120, the stator body 121 of integral type is formed in a cylindrical shape by powder metallurgy.

Preferably, the powder is a soft magnetic composite (hereinafter, SMC). The SMC is a kind of metal powder, which is a magnetic material with electric and magnetic characteristics improved in order to be applied to an electromagnetic system such as a motor, and is made by compressing a powder of a magnetic material coated with an insulating coating material.

The powder metallurgy is referred to as a processing technique for making a material having a unique property or a product of a given shape using the phenomenon that a metal powder or a compound thereof is hardened when heated at a high temperature.

Fig. 5 is a perspective view showing a second stator for a reciprocating motor not according to the present invention.

As illustrated therein, the second stator 120 has several eddy current breaking slits 122 axially split formed on the outer circumferential surface of the stator body 121 of an integral cylindrical shape. When occasion demands, the eddy current breaking slits 122 can be formed on the inner circumferential surface of the stator body 121. The eddy current breaking slits 122 are axially formed in order to decrease eddy current losses caused by eddy currents.

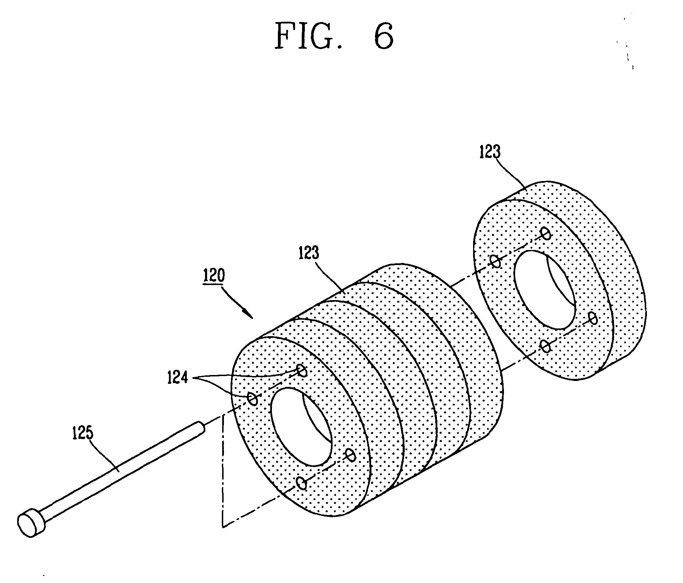

Fig. 6 is a perspective view showing a second stator for a reciprocating motor not according to the present invention.

As illustrated therein, the second stator 120 can be formed by laminating several stator modules 123 of a cylindrical shape having a predetermined height in axial direction. After the lamination, the stator modules 123 are fixed by rivets 125 via rivet holes 124 arranged in circumferential direction.

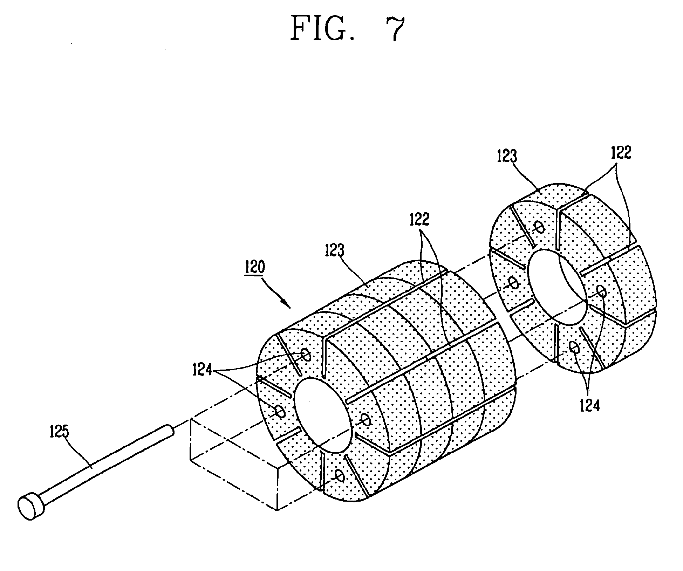

Fig. 7 is a perspective view showing a second stator for a reciprocating motor not according to a the present invention.
As illustrated therein, the second stator 120 is formed by laminating several stator modules 123 of a cylindrical shape having a predetermined height in axial direction, and eddy current breaking slits 122 are axially formed on the outer circumferential surface thereof. When occasion demands, the eddy current breaking slits 122 can be formed on the inner circumferential surfaces of stator modules 123. After the lamination, the stator modules 123 are fixed by rivets 125 via rivet holes 124 arranged in circumferential direction.

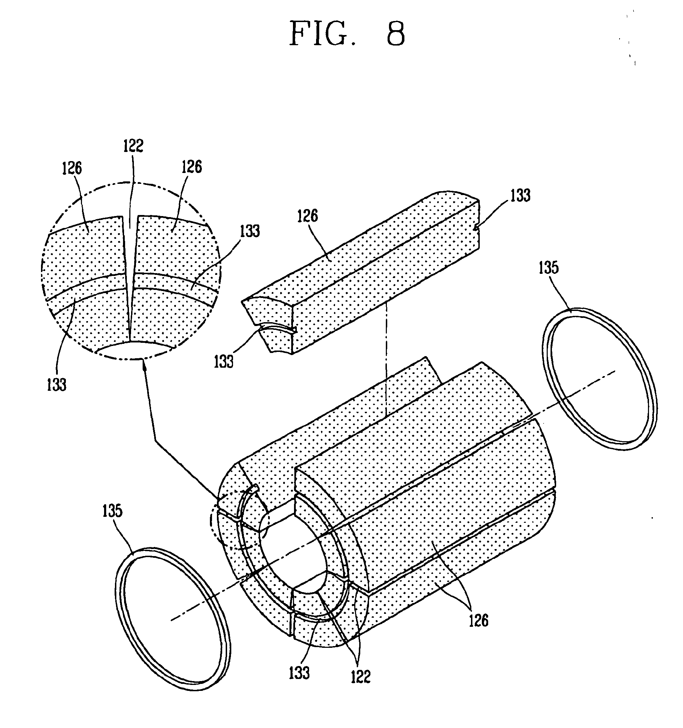

Fig. 8 is a perspective view showing a second stator for a reciprocating motor according to an embodiment of the present invention. As illustrated therein, the second stator 120 is formed by forming stator blocks 126 of a circular arc shape, radially laminating the stator blocks 126 and fixing both sides thereof by fixed rings 135. Fixed ring insertion grooves 133 are formed at the positions corresponding to the fixed rings 135 on axial sections of the fixed blocks 126 so as to couple to the fixed rings 135.

The angle of the inner circumferential arc of the fixed blocks 126 and the angle of the outer circumferential arc thereof are made different so that eddy current breaking slits 122 are formed in the gaps between the fixed blocks 126. That is, the angle of the inner circumferential arc is larger than the angle of the outer circumferential arc.

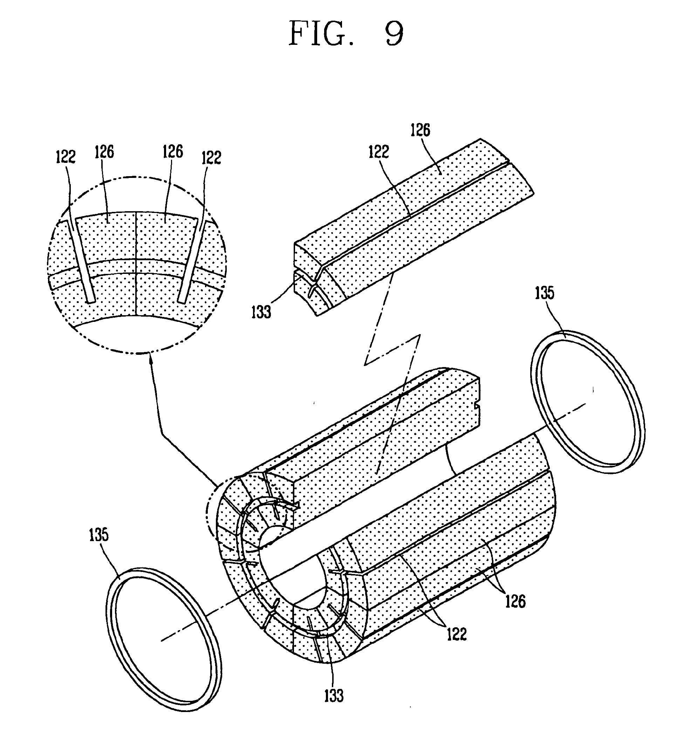

Fig. 9 is a perspective view showing a second stator for a reciprocating motor not according to the present invention. As illustrated therein, the second stator 120 is formed by forming stator blocks 126 of a circular arc shape, radially laminating the stator blocks 126 and fixing both sides thereof by fixed rings 135. The different thing from the embodiment shown in Fig. 8 is that the fixed blocks 126 are closely adhered to each other because the angle of the inner circumferential arc and the angle of the outer circumferential arc are the same, and eddy current breaking slits 122 are formed separately on the outer circumferential surfaces of the fixed blocks 126. Fixed ring insertion grooves 133 are formed at the positions corresponding to the fixed rings 135 on axial sections of the fixed blocks 126 so as to couple to the fixed rings 135.

Operations and effects of the stator for the reciprocating motor constructed as above will be described as follows.

When an electric power is applied to the winding coil 300, a flux is formed between the first stator 110 and the second stator 120. Then, the mover assembly 200 placed in an air gap between the first stator 110 and the second stator 120 continuously perform reciprocating movements while moving along the direction of the flux.

Herein, the second stator with no coil 300 is molded by powder metallurgy. The inner stator thus fabricated is formed by laminating several stator blocks rather than by laminating several hundreds of thin silicon steel sheets in radial direction, whereby fabrication processes can be simple and accordingly production costs of the reciprocating motor can be reduced sharply.

In addition, as the second stator is fabricated of thick blocks, the sectional area through which the flux passes is increased and the improvement of the motor efficiency can be expected.

## Claims

1. A stator (100) for a reciprocating motor, comprising:
a first stator (110); and
a second stator (120) formed by circumferencially assembling and fixing next to each other several stator blocks (126) of an annular sector cross section having a predetermined axial length and being molded by powder metallurgy, said second stator being inserted radially within and with a predetermined air gap from the first stator (110), **characterized in that** the first stator (110) is provided with a winding coil (300) and **in that** the angle of the radially inner circumferential arc of each of the fixed blocks (126) and the angle of the radially outer circumferential arc thereof are made different so that eddy current breaking slits (122) are formed between the fixed blocks (126) .

2. The stator (100) of claim 1, wherein the powder for molding the second stator (120) is a soft magnet composite.

3. The stator (100) of claim 1, wherein the stator blocks (126) have fixed ring insertion grooves (133) formed on axial sections thereof for press fitting and fixing fixed rings (135) thereto.

4. The stator (100) of claim 1, wherein the angle of the inner circumferential arc of the fixed blocks (126) is made larger than the angle of the outer circumferential arc thereof.

## Patentansprüche

1. Ständer (100) für einen Kolbenmotor, umfassend:
einen ersten Ständer (110); und
einen zweiten Ständer (120), der durch umfängliches Zusammenbauen und Befestigen von mehreren Ständerblöcken (126) nebeneinander mit einem ringförmigen Sektorquerschnitt, die eine vorgegebene axiale Länge aufweisen und durch Pulvermetallurgie geformt sind, ausgebildet ist, wobei der zweite Ständer radial in und mit einem vorgegebenen Luftspalt zu dem ersten Ständer (110) eingefügt ist, **dadurch gekennzeichnet, dass** der erste Ständer (110) mit einer Wicklungsspule (300) versehen ist, und dass der Winkel des radial inneren Umfangsbogens von jedem der starren Blöcke (126) und der Winkel des radial äußeren Umfangsbogens davon derart unterschiedlich hergestellt ist, dass Wirbelstrombrechschlitze (122) zwischen den starren Blöcken (126) ausgebildet sind.

2. Ständer (100) nach Anspruch 1, wobei das Pulver zum Formen des zweiten Ständers (120) ein weichmagnetischer Verbundstoff ist.

3. Ständer (100) nach Anspruch 1, wobei die Ständerblöcke (126) Einfügungsnuten (133) für starre Ringe aufweisen, die auf axialen Abschnitten davon zum Einpressen und Befestigen von starren Ringen (135) darin ausgebildet sind.

4. Ständer (100) nach Anspruch 1, wobei der Winkel des inneren Umfangsbogens der starren Blöcke (126) größer als der Winkel des äußeren Umfangsbogens davon hergestellt ist.

## Revendications

1. Stator (100) pour un moteur à mouvement alternatif, comprenant :
un premier stator (110) ; et
un second stator (120) formé en assemblant circonférentiellement et en fixant à côté les uns des autres plusieurs blocs de stator (126) d'une section transversale de secteur annulaire ayant une longueur axiale prédéterminée et étant moulés par métallurgie des poudres, ledit second stator étant inséré radialement à l'intérieur de et avec un entrefer prédéterminé par rapport au premier stator (110), **caractérisé en ce que** le premier stator (110) est pourvu d'un bobine d'enroulement (300) et **en ce que** l'angle de l'arc circonférentiel radialement vers l'intérieur de chacun des blocs fixes (126) et l'angle de l'arc circonférentiel radialement vers l'extérieur de ceux-ci sont réalisés différemment de sorte que des fentes de rupture de courant de Foucault (122) soient formées entre les blocs fixes (126).

2. Stator (100) selon la revendication 1, dans lequel la poudre pour mouler le second stator (120) est un composé d'aimant tendre.

3. Stator (100) selon la revendication 1, dans lequel les blocs de stator (126) possèdent des cavités d'insertion d'anneau fixes (133) formées sur des sections axiales de ceux-ci à des fins d'ajustement par pressage et de fixation d'anneaux fixes (135) sur ceux-ci.

4. Stator (100) selon la revendication 1, dans lequel l'angle de l'arc circonférentiel intérieur des blocs fixes (126) est réalisé en étant plus grand que l'angle de l'arc circonférentiel extérieur de ceux-ci.
